# EUROPEAN PATENT APPLICATION

(11) **EP 2 047 761 A1**
(43) Date of publication of application: **15.04.2009**
(21) Application number: 07117738.0
(22) Date of filing: 02.10.2007
(51) Int. Cl.: A23L 1/308, A23C 9/133, A23L 2/52, A23L 1/39, A23L 1/164

(54) **Composite food product in a pack comprising fibers and method for preparing such product**

(71) Applicant: Unilever N.V., 3013 AL Rotterdam (NL)
(72) Inventor: Bialek, Jadwiga, Malgorzata Unilever R&D Vlaardingen B.V., 3133AT Vlaardingen. (NL); Abrahamse, Salomon, Leendert Unilever R&D Vlaardingen B.V., 3133AT Vlaardingen. (NL)
(74) Representative: Wurfbain, Gilles L.

(57) **Abstract**

A composite food product comprising fibers in a pack is provided. The pack includes at least 35 grams of the food product. The food product comprises 5-95 wt% of moisture and 95-5 wt% of dry matter and fibrous plant material derived from plants of the Asclepiadaceae family in an amount sufficient to provide 1.0-40 wt% of fibers calculated on the dry matter of the food product. The food product can be prepared by (a) combining ingredients to be included in the food product including comminuted dried fibrous plant material, to obtain a product composition, (b) subjecting the product composition to treatment to obtain the desired product format, and (c) packing the food product in a pack.

## Description

### FIELD OF THE INVENTION

The invention relates to a composite food product in a pack comprising fibers and to a method for preparing such product.

### BACKGROUND OF THE INVENTION

The range of available food products that aim to offer a healthy choice to consumers is expanding. The number of people with health concerns relating to a suboptimal diet and life style is increasing. While there are many hypotheses about the underlying causes of these developments, the full mechanisms involved are not yet understood. It is thought that as one of the contributing factors, the extensive use of refined ingredients in food preparations may play a role. As a result, there is a growing need for wholesome products that more resemble traditional foods and drinks and that contain fewer individual ingredients that may require separate mention on the label. Another factor thought to play a role is that with the high degree of refining of food ingredients, the amount of dietary fiber present in the diet may be lower than optimal. A further factor is that the overall energy (calorie) intake for many people has become too high.

To formulate food products that take these considerations into account is a challenge. Specifically, some sources of fibers are refined; e.g. inulin can be included as a fiber source in the form of inulin syrup. Sources of dietary fiber that can be less refined are for example potatoes, bananas, cereals and pulses. However, the incorporation of such materials in a food product typically results in high viscosity and high energy density (high calorie content) in the product relative to the amount of fibers present. If fruit is used as source of fibers without much refining, the accompanying amount of sugars can be undesirably high. The use of fruit as fiber source is also only an option for products for which the accompanying sweetness and sourness of the fruit is not problematic. Usually the amount of digestible carbohydrate in such low refined fiber sources exceeds the amount of fibers often by as much as a factor of 2 or 3.

It is known to use material derived from succulent plants in the preparation of edible products. For example, stalks of agave plants when roasted can be sweet like molasses. The sap of young flower stalks e.g. of the A. Americana species is used in Mexico to prepare a beverage. Agave syrup is used as alternative to sugar. Leaf tea of the agave plant is taken orally to treat constipation.

Similarly, material derived from aloe plants has been used in consumable products, e.g. in OTC drugs. Drinks made from or containing chunks of aloe pulp are used in Asia as commercial beverages and as a tea additive.

Use of extracts of plants of the Asclepiadaceae family has recently received much attention in relation to weight management and hunger control. See e.g. US 2006/0084638 and US 2006/0083795. There is particular interest in extracts containing steroidal glycosides of the *Hoodia gordonii* plant. Dried milled powder of *Hoodia gordonii* is available as a steam pasteurized product screened to a particle size of 150 micron from Herbal Teas International, Anaheim California, USA. A wide range of products is offered via the Internet which claim to contain material from *Hoodia gordonii* plants. These products are mostly in the form of pills or tablets, capsules or caplets, soft gel capsules and the like. There are also products on offer claiming to contain mg-quantities of *Hoodia gordonii* material for "burning fat" or the like in the form of chewing gum, fizzy drink mix or so-called sports drink. Use of *Hoodia gordonii* material in a health supplement in relation to weight loss is also disclosed in US 2004/0265398, US 2006/0105068 and US 2005/0276869. The health supplement can be in the form of a tablet or a liquid. The recommended intake of *Hoodia gordonii* in one dosage is 5-200 mg per tablet and 300-600 mg per day, respectively. US 2005/0276839 discloses a food supplement product containing *Hoodia gordonii* as an appetite suppressant. The supplement is in the form of tablets or a beverage. The beverage contains 200-400 mg/L of *Hoodia gordonii* and 5-25 g/L of maltodextrin. The use of *Hoodia gordonii* material to promote weight loss in dietary supplements is further mentioned in US 2006/0013903, US 2006/0051435 and EP 1640015. US 2006/0159773 is concerned with controlling obesity and appetite using herbal based compositions comprising a weight reducing amount of *Hoodia gordonii* or an extract thereof and green coffee bean extract. The compositions can be administered in the form of tablets, capsules, powdered mixtures, granulations, effervescent tablets, orally dissolvable wafers or films, etc. For example, the powder formulation of active material can be mixed into a dietary shake formulation such as Slim.Fast® or the like. The recommended amount of *Hoodia gordonii* is 100-700 mg per dosage.

US 7,008,648 and US 2006/0024388 disclose the use of plant material derived from plants of the genera Stapelia and Orbea, which belong to the Asclepiadaceae family, and in particular of extracts comprising pregnane glycosides, to suppress or curb appetite or prevent or treat obesity. Compositions for incorporating the active materials may for example be pharmaceutical compositions or dietary supplements. Suitable formats include sachets, pills, tablets, liquids, patches and injectables.

None of the above references addresses the issues arising in formulating food products that should have pleasant organoleptic properties, desirable texture and thickness, that contain an appropriate amount of dietary fibers and that are not too highly refined.

### SUMMARY OF THE INVENTION

We have now found that a food product comprising fibers can be made without the fiber source needing to be highly refined. The incorporation of the fiber source does not need to be accompanied by a high increase in energy content due to accompanying carbohydrates. The fiber material does not need to cause strong thickening, which especially if the food product is in the form of a beverage, can be important.

The present invention provides a composite food product comprising fibers in a pack wherein the pack contains at least 35 grams of the food product, which food product comprises 5-95 wt% of moisture and 95-5 wt% of dry matter, which food product comprises fibrous plant material derived from plants of the Asclepiadaceae family (hereinafter sometimes referred to as "the APF") in an amount sufficient to provide 1-40 wt% of fibers calculated on the dry matter of the food product.

The invention also provides a method for preparing the present food product which method comprises the steps of
(a) combining ingredients to be included in the food product, including comminuted dried fibrous plant material derived from plants of the Asclepiadaceae family, to obtain a product composition,
(b) subjecting the product composition to treatment to obtain the desired product format, and
(c) packing the food product in a pack.

With the present invention wholesome food products can be prepared that can have a relatively simple label, can contain a relatively high amount of dietary fiber, and that do not need to have a high energy content or a high viscosity or thickness. A high degree of refining in the preparation of the food product and/or its ingredients can be avoided, which can also help to avoid high cost and adverse effects on the nutritional value of the nutrients in the product that could otherwise be caused by intensive processing and refining.

### DETAILED DESCRIPTION OF THE INVENTION

By composite food product is meant a formulated food product that is suitable for human consumption, i.e. it excludes naturally occurring materials. It also excludes pharmaceutical, medicinal and OTC medicines such as pills, soft and hard gel capsules, effervescent tablets, ointments, powder sachets, and the like. The invention relates to food product forms that are normally consumed in a volume that can contain a material amount of dietary fiber. Accordingly the present food product is contained in a pack that contains at least 35 grams of the food product; the present invention is not concerned with products the typical consumption volume of which at one consumption occasion is very small such as e.g. chewing gum or the like.

The food product comprises 5-95 wt% of moisture and 95-5 wt% of dry matter. By "dry matter" is meant all ingredients, except water. For the consumption of food products with a significant amount of fiber it is desirable for there to be at least some water present. Preferably, the amount of moisture in the product is at least 10 wt%, more preferably at least 20 wt%. On the other hand, to be able to obtain a stable and sensorially pleasing product containing a substantial amount of fibers, it is desirable that there is also a notable amount of dry matter in the product. The present invention does not apply to products like black tea or black coffee that typically contain less than about 2 or 3 wt% of dry matter. Preferably the dry matter content of the product is at least 7 wt%, more preferably it is at least 10 wt% of the product.

The food product contains 1-40 wt% of APF calculated on the dry matter of the food product. APF is included in the total dry matter. The amount of the APF is preferably at least 2 wt%, more preferably at least 5 wt% calculated on the dry matter of the food product and preferably it is less than 30 wt% of the food product, calculated on its dry contents. By "fibers" are meant dietary fibers. These are materials of plant cells which cannot be broken down by enzymes in the human gastro-intestinal tract.

Dietary fibers include organic components of vegetable food which are not broken down by the enzymes of the small intestine in humans and thus remain unabsorbed in the gastro-intestinal tract. Dietary fiber is not necessary fibrous in nature. Dietary fiber is a nutritional term. Both soluble plant cell wall materials, primarily cellulose and lignin, and non-starch, water soluble polysaccharides (pectin) are components of dietary fibers. They consist mainly of cellulose, hemicellulose, pectin, inulin and lignin.

The APF is derived from plants of the Asclepiadaceae family. Examples of plants of this family are the *Hoodia,* Caralluma, Orbea, Stapelia, Trichocaulon and Lavrania genera of plants. Preferably, material derived from plants of the genus *Hoodia* is used, e.g. *Hoodia* currorii, *Hoodia gordonii* and *Hoodia* lugardii. Material from *Hoodia gordonii* is the most preferred. Materials from different species and/or genera may also be used in combination. The APF can be obtained from the whole plant or, preferably, the aerial parts thereof; material from the roots is preferably not included. For example the aerial parts of the plant may be first coarsely cut and then comminuted to smaller particle size to provide the APF which can be used directly for formulating the food product. It is however preferred to facilitate storage, transport and handling and to preserve microbial quality, to process the plant material to obtain a dried fibrous plant material with relatively small particle size. For example the aerial parts of the plant can first be coarsely cut, the coarse pieces obtained can then be subjected to drying e.g. in the sun or an oven, and the dry material can then be comminuted or milled to obtain a dry fibrous plant material with small particle size. This material can be packed, stored and/or transported as desired. This ingredient can be used as the fibrous plant material to be included in the food product. Other methods to treat the harvested plants to obtain an ingredient that can be included in a composite food product are known to the skilled person and can also be used. It can be advantageous to use as the fibrous plant material the material that is left over after the sap of the plant has been expelled or extracted, or after an extract has been prepared from the plant material otherwise, e.g. by solvent extraction. Much material of plants such as *Hoodia* is extracted to obtain extracts containing steroidal glycosides for weight loss or satiety control as described above. The residue of such extraction might otherwise be considered waste material while it still contains most or all of its fibers and much of its other nutrients. The presence or absence of the steroidal glycosides is not material to the present invention, although steroidal glycosides from *Hoodia* or elsewhere may be included in the product. If the plant material has been subjected to solvent extraction, e.g. with hexane, alcohol or acetone, then naturally care should be taken to remove residues of the solvent. Methods to do this and obtain plant material residue that is safe and suitable for human consumption are well known in the art.

For many consumers the cause of the intake of too much energy is related to the high content of digestible carbohydrates in their diet. By digestible carbohydrates are meant carbohydrates that can be digested by the human body and that provide about 4 kcal/g of energy. Digestible carbohydrates comprise sugars and starches; they exclude the dietary fibers. The present composite food products are preferably formulated such that they provide a wholesome contribution to the diet without contributing a high amount of energy. Accordingly, the present food product preferably comprises fibers and digestible carbohydrate in a weight ratio between 0.1 and 1. Preferably this weight ratio is at least 0.2, more preferably it is at least 0.3. The recommended weight ratio of dietary fiber and digestible carbohydrate in a healthy diet is in the order of 0.1. The present product aims to provide at least a sufficient amount of fibers relative to the amount of digestible carbohydrates as recommended for a healthy diet. Preferably, it contains more fibers to help compensate for the low level present in many other foods, but an excessive amount should be avoided. At very high fiber content it usually also becomes difficult to get good organoleptic properties.

Analysis of several crops of *Hoodia gordonii* showed that the plant material typically comprises, expressed as weight % on dry matter, about 4 wt% protein, about 5 wt% fat, about 11 wt% ash (determined after 16 hours), about 22 wt% digestible carbohydrate and about 58 wt% dietary fiber. About half of the digestible carbohydrates is starch. The ratio of fiber and digestible carbohydrate in this ingredient is thus around 2.5. Consequently, much starch and sugar can still be included in the product without moving outside the desired window of the weight ratio between 0.1 and 1. This illustrates that this type of fibrous plant material is a rich source of fibers without needing to refine the ingredient and without getting a high content of accompanying starches and sugars. This leaves the product developer a big formulation space to compose a product with a healthy profile, good taste and texture, a high amount of fibers and overall sensory profile that is consistent with the consumers expectation for the product.

Preferably in the present product, 60-100 wt% of the APF are insoluble fibers. By insoluble is meant insoluble in water. To obtain good tasting products, preferably the APF is finely dispersed or dissolved in the food product. Usually, part of the fibrous plant material will dissolve in the moisture present in the food product and part of it will not dissolve. Usually the part that does not dissolve will be at least 50 wt% of the APF and it may be substantially more, even all of the APF. The APF that is not dissolved in the food product is preferably present such that at most 10 wt% of the APF is in the form of particles having a largest dimension of more than 2 mm. More preferably, at most 10 wt% of the APF is present in the food product in the form of particles having a largest dimension of more than 1 mm. It is especially preferred that the portion of the APF present in the form of particles with a largest dimension of more than 1mm is less than 5 wt%, less than 2 wt% being even better.

In the preferred products according to the invention, the fiber from the plant material (APF) represents at least 70% of all the fiber present in the product, preferably in order to attain the desired viscosity and organoleptic properties, as well as the preferred carbohydrate/fiber ratios, at least 80%, most preferably at least 90% and optimally, substantially all (e.g., at least 95%) of the total fiber present.

The food product comprises preferably 0.5-30 wt% protein. More preferably it comprises at least 1.0 wt% protein, more preferably at least 2.0 wt% protein. The protein content in the food product is preferably less than 20 wt%, more preferably less than 15 wt%.

According to a preferred embodiment, the food product is in the form of a beverage which comprises 75-95 wt% moisture. The dry matter in such beverage is consequently 5-25 wt%. The expression "beverage" encompasses soups and pourable yoghurt products and the like, even though conventionally such products may more commonly be consumed with a spoon. In a particularly preferred embodiment, the beverage consists of ingredients selected from the group consisting of materials of vegetable origin, vitamins, minerals, water and combinations of two or more thereof. For example the beverage may contain a combination of one or more fruit juices, concentrates or purees and/or one or more vegetable juices or purees including APF from e.g. *Hoodia gordonii,* optionally diluted to the desired strength with water. If so desired, vitamins and minerals can be included to fortify the product.

In another preferred embodiment, the beverage comprises 0.5-10 wt% protein, 0.5-6 wt% fat and 3.0-20 wt% digestible carbohydrate. Such a beverage can for example be a milk or yoghurt based beverage, e.g. based on dairy milk or soy milk, or based on a combination of such milk or yoghurt based drink in combination with fruit material, e.g. fruit juice, concentrate and/or puree, optionally diluted with water to the desired strength. In this beverage, preferably the fat is vegetable fat, dairy fat, or a combination thereof. The expression vegetable fat encompasses vegetable oil.

If the food product is in the form of a beverage, the amount of APF present in the product preferably is at least 5 wt%, more preferably at least 10 wt% of the dry matter of the beverage. The APF preferably does not exceed 30 wt% of the dry matter of the beverage, more preferably it does not exceed 25 wt% of the dry matter. The beverage comprises calculated on the total weight of the beverage, preferably at least 2.0 wt% of APF, more preferably at least 3.0 wt% of APF. The amount of APF in the beverage expressed on its total weight preferably is less than 6 wt%, more preferably less than 5 wt%.

In another preferred embodiment the present food product is in the form of a bar which comprises 5-30 wt% moisture, 3.0-30 wt% protein, 3.0-30 wt% fat and 35-80 wt% digestible carbohydrate. Such bar can be for example a granola bar or a muesli bar that includes e.g. cereals, soy nuggets and/or pieces of fruits and/or vegetables, minerals and the like in addition to the APF. Such a bar can be a good carrier for a substantial amount of fiber. Preferably the amount of APF in such product calculated on the total weight of the product is at least 2 wt%, more preferably at least 5 wt%. The amount of APF in such a bar preferably is less that 20 wt%, more preferably less than 15 wt%.

The choice of the pack material for the present product is not critical and the product can be packed in conventional manner. For example, beverages can suitably be packed in cans, plastic or glass bottles, cartons, tetra-packs, doy-packs and the like. Bars can suitably be packed in wrappers, cartons, boxes etc. Other packaging materials may also be used.

The composite food product is packaged in a pack that includes at least 35 grams of the food product. Preferably the pack size is such that it contains at least 40 grams, more preferably at least 50 grams of the product. The pack size preferably is such that its contents are at most 2 kg, more preferably at most 1.5 kg. The bigger pack sizes are usually more attractive for beverages including soups, while the smaller sizes are more often preferred for products with relatively low moisture levels, e.g. bars.

It is an advantage of the present invention that the products can be formulated and prepared relatively easily. To facilitate stock keeping and planning, as described above, it is preferred to include the fibrous plant material in the product in comminuted and dried form. However, to obtain an attractive food product, the comminuted dried plant material should be combined with at least one other ingredient and be subjected to treatment to obtain the desired product format. In this way, the fibrous plant material can become suitably integrated in the overall product. The remaining ingredients to be included in the product preferably are also included during step (a) of the process, but if so desired some of the ingredients may be included during or after step (b) of the process.

For example, in step (b) part of the composition may be subjected to pasteurization or sterilization or part of the ultimate composition may be homogenized, e.g. by passage through a colloid mill or a high pressure homogenizer, while some of the components are still to be included. Such processing may e.g. be useful for the preparation of a beverage, if some of the ingredients are sensitive to the treatment and can better be included afterwards. Flavours might e.g. deteriorate under sterilization. Discrete pieces of vegetable or meat that are intended to be present e.g. in a soup, would get damaged by homogenization. It can then be attractive to include such components after the treatment in step (b).

In the present process the treatment in step (b) preferably includes heating to a temperature of at least 80 °C and homogenisation. More preferably the treatment includes pasteurization or sterilization. This treatment is particularly desirable if the food product is intended to have a relatively high moisture content, e.g. if it is a beverage.

In a preferred embodiment, the treatment in step (b) of the process includes extrusion. Such step is especially useful if the product to be prepared is a bar, e.g. meal replacement bar, granola bar, muesli bar or the like.

Throughout this specification all parts, percentages and ratios are by weight unless otherwise indicated. Except in the operating and comparative examples, or where otherwise explicitly indicated, all numbers in this description indicating amounts of material ought to be understood as modified by the word "about".

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Example 1

A yoghurt drink containing 0.9% (w/w) APF (1.6% (w/w) *Hoodia gordonii*). APF content is 10% by weight of dry matter.

| Material | Yoghurt drink (g/220 g) |
|---|---|
| Enova oil, diglyceride oil | 6.4 |
| Water (demiwater) | 80 |
| Yogurt (protein 4.5 g/100 ml) | 127 |
| Sucrose, crystalline | 4.4 |
| Sucralose | 0.03 |
| *Hoodia gordonii* (dried and milled) | 3.6 |
| HM-Pectin, Grindsted AMD 783 | 0.99 |
| Chlorophyl, C-10,000P-WS-AP, 1% solution | 0.44 |
| Riboflavine, 1% solution | 0.022 |
| Raspberry flavour | 0.44 |
| Raisin flavour | 0.022 |
| Sucrose Octa Acetate | 0.00088 |
| Quassia extract, 1% fat solution | 0.0044 |

### Comparative Example 2

A yoghurt drink containing 0.9% (w/w) Herbacel AQ Plus citrus fibre. Herbacel AQ Plus citrus fibre content is 10% by weight of dry matter.

| **Material** | **Yoghurt drink (g/220 g)** |
|---|---|
| Enova oil, diglyceride oil | 6.4 |
| Water (demiwater) | 80 |
| Yogurt (protein 4.5 g/100 ml) | 127 |
| Sucrose, crystalline | 4.4 |
| Sucralose | 0.03 |
| Herbacel AQ Plus citrus fibre | 2.2 |
| HM-Pectin, Grindsted AMD 783 | 0.99 |
| Chlorophyl, C-10,000P-WS-AP, 1% | 0.44 |
| solution | |
| Riboflavine, 1% solution | 0.022 |
| Raspberry flavour | 0.44 |
| Raisin flavour | 0.022 |
| Sucrose Octa Acetate | 0.00088 |
| Quassia extract, 1% fat solution | 0.0044 |

### Comparative Example 3

A yoghurt drink with banana containing 0.9% (w/w) banana fibre. Banana fibre content is 10% by weight of dry matter.

| **Material** | **Yoghurt drink (g/220 g)** |
|---|---|
| Enova oil, diglyceride oil | 6.4 |
| Water (demiwater) | 80 |
| Yogurt (protein 4.5 g/100 ml) | 127 |
| Sucrose, crystalline | 4.4 |
| Sucralose | 0.03 |
| Banana | 95.0 |
| HM-Pectin, Grindsted AMD 783 | 0.99 |
| Chlorophyl, C-10,000P-WS-AP, 1% | 0.44 |
| solution | |
| Riboflavine, 1% solution | 0.022 |
| Raspberry flavour | 0.44 |
| Raisin flavour | 0.022 |
| Sucrose Octa Acetate | 0.00088 |
| Quassia extract, 1% fat solution | 0.0044 |

### Example 4

Viscosity of compositions prepared in examples 1 to 3 was measured using a TA ARG2 with serrated cylinder and shear sweep from -1000 to 0.1 /s at 20°C in 3 minutes. Viscosity was also measured for examples 1 and 2 after homogenising the drinks at 100 and 200 bar. Table 1 shows the results of the viscosity measured.

**TABLE 1**

| | Homogenisation pressure (bar) | Viscosity (Pa.s) | |
|---|---|---|---|
| | | Shear rate 9 /s | Shear rate 107 /s |
| Yoghurt with *Hoodia* | 0 | 0.089 | 0.031 |
| *gordonii* | 100 | 0.139 | 0.038 |
| (example 1) | 200 | 0.163 | 0.043 |
| Yoghurt with Herbacel | 0 | 0.199 | 0.059 |
| AQ Plus citrus | 100 | 0.365 | 0.081 |
| (Comparative example 2) | 200 | 0.901 | 0.157 |
| Yoghurt with banana (Comparative example 3) | 0 | 0.256 | 0.102 |

It can be seen from the results in Table 1 that Example 1 with APF according to the invention had by far the lowest viscosity compared to typical fiber sources outside the scope of the invention in Comparative examples 2 and 3.

While described in terms of the presently preferred embodiments, it is to be understood that such disclosure is not to be interpreted as limiting. Various modifications and alterations will no doubt occur to one skilled in the art after having read the above disclosure. Accordingly, it is intended that the appended claims be interpreted as covering all such modifications and alterations as falling within the true spirit and scope of the invention.

## Claims

1. A composite food product comprising fibers in a pack wherein the pack contains at least about 35 grams of the food product, which food product comprises 5-95 wt% of moisture and 95-5 wt% of dry matter, which food product comprises fibrous plant material derived from plants of the Asclepiadaceae family in an amount sufficient to provide from about 1% to about 40 wt% of fibers calculated on the dry matter of the food product.

2. A product according to claim 1 wherein the food product comprises at least about 2.0 wt%, calculated on the dry matter of the food product, of fibers from the fibrous plant material.

3. A product according to claim 1 or claim 2 wherein 60-100 wt% of the fibers are insoluble fibers.

4. A product according to any one of claims 1-3 wherein the fibrous plant material is derived from plants of the *Hoodia* genus.

5. A food product according to any one of claims 1-4 wherein the fibrous plant material is finely dispersed or dissolved in the food product.

6. A food product according to any one of claims 1-5 wherein at most 10 wt% of the fibrous plant material is present in the food product in the form of particles having a largest dimension of more than 2 mm.

7. A food product according to claim 6 wherein at most 10 wt% of the fibrous plant material is present in the food product in the form of particles having a largest dimension of more than 1 mm.

8. A food product according to any one of claims 1-7 comprising fibers and digestible carbohydrates in a weight ratio between 0.1 and 1.

9. A food product according to any one of claims 1-8 comprising 0.5 - 30 wt% protein.

10. A food product according to any one of claims 1-9 which food product is in the form of a beverage which comprises 75 - 95 wt% moisture.

11. A food product according to claim 10 wherein the beverage consists of ingredients selected from the group consisting of materials of vegetable origin, vitamins, minerals, water and combinations of two or more thereof.

12. A food product according to claim 10 wherein the beverage comprises 0.5-10 wt% protein, 0.5-6 wt% fat and 3.0-20 wt% digestible carbohydrate.

13. A food product according to any one of claims 1-9 which food product is in the form of a bar which comprises 5-30 wt% moisture, 3.0-30 wt% protein, 3.0-30 wt% fat and 35-80 wt% digestible carbohydrate.

14. A method for preparing a food product according to any one of claims 1-13 comprising the steps of (a) combining ingredients to be included in the food product, including comminuted dried fibrous plant material derived from plants of the Asclepiadaceae family, to obtain a product composition, (b) subjecting the product composition to treatment to obtain the desired product format, and (c) packing the food product in a pack.

15. A method according to claim 14 wherein the treatment in step (b) includes heating to a temperature of at least 80°C and homogenization.

16. A method according to claim 14 wherein the treatment in step (b) includes extrusion.
